# EUROPEAN PATENT SPECIFICATION

(11) **EP 4 295 805 B1**
(45) Date of publication and mention of the grant of the patent: **03.09.2025**
(21) Application number: 23180931.0
(22) Date of filing: 22.06.2023
(51) Int. Cl.: A61C 1/14

(54) **DENTAL HANDPIECE**
ZAHNÄRZTLICHES HANDSTÜCK
PIÈCE À MAIN DENTAIRE

(30) Priority: 23.06.2022 JP 2022101057
(43) Date of publication of application: 27.12.2023
(73) Proprietor: J. MORITA MFG. CORP., Fushimi-ku Kyoto-shi, Kyoto 612-8533 (JP)
(72) Inventor: TANAKA, Hitoshi, Kyoto, 612-8533 (JP)
(74) Representative: Müller Hoffmann & Partner

(56) References cited:
- US-B2- 7 048 540

## Description

### BACKGROUND OF THE INVENTION

### Field of the Invention

The present invention relates to a dental handpiece.

### Description of the Background Art

A dental handpiece rotates a cutting tool attached to the dental handpiece at a high speed. Therefore, the cutting tool generates heat when cutting a tooth. This may adversely affect a living body. Thus, the dental handpiece has a function of introducing spray water onto the cutting tool so as to cool the cutting tool.

The dental handpiece having the function of introducing spray water onto the cutting tool is described in, for example, Japanese Patent No. 5186464. In the dental handpiece described in this publication, a water spraying tube path is formed in a head portion so as to mix water from a water supply tube path with air from an air supply tube path and eject it from an ejection port toward the cutting tool. The water spraying tube path is formed to orient obliquely downward from a merged portion of the water supply tube and the air supply tube and is configured to introduce spray water from the ejection port opened at a lower surface of a base portion of the head portion.

Since the spray water mixed at the merged portion of the water supply tube path and the air supply tube path is introduced from the ejection port toward the cutting tool in the dental handpiece described in the above publication, the spray water is spread from the ejection port uniformly in the longitudinal direction and lateral direction of the cutting tool. In order to surely hit the spray water on the cutting tool, the spray water is required to be spread in the longitudinal direction (long-side direction) of the cutting tool. On the other hand, when the spray water is spread in the lateral direction (short-side direction) of the cutting tool, a portion of a tooth that is being cut is less likely to be seen at the time of cutting the tooth.

Further technological background can be found in US 7 048 540 B2. US 7 048 540 B2 discloses a dental handpiece configured to detachably hold a cutting tool, the dental handpiece comprising: a holding portion provided with an insertion port into which the cutting tool is insertable, the holding portion being configured to hold the cutting tool inserted in the insertion port; and a main body portion configured to accommodate the holding portion, the main body portion being provided with a water introduction hole and air holes.

### SUMMARY OF THE INVENTION

The present invention has been made to solve the above-described problem and has an object to provide a dental handpiece to spread spray water in a longitudinal direction of a cutting tool and suppress the spray water from being spread in a lateral direction of the cutting tool.

A dental handpiece of the present invention is a dental handpiece configured to detachably hold a cutting tool. The dental handpiece includes: a holding portion provided with an insertion port into which the cutting tool is insertable, the holding portion being configured to hold the cutting tool inserted in the insertion port; and a main body portion configured to accommodate the holding portion, the main body portion being provided with a water introduction hole and a plurality of chip air holes. The plurality of chip air holes is disposed to sandwich the water introduction hole in a second direction intersecting a first direction in which the insertion port and the water introduction hole are arranged.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view schematically showing a dental handpiece according to an embodiment.
Fig. 2 is a cross-sectional view taken along a line II-II of Fig. 1.
Fig. 3 is an enlarged cross-sectional view showing a portion III in Fig. 2.
Fig. 4 is a bottom view of a portion corresponding to Fig. 3.
Fig. 5 is a diagram showing a positional relation between each of a water introduction hole and a plurality of chip air holes and a cutting tool in the dental handpiece according to the embodiment.
Fig. 6 is an enlarged view showing a spraying portion at a portion VI in Fig. 5.
Fig. 7 is a perspective view showing a state of spray water in the dental handpiece according to the embodiment.
Fig. 8 is a side view showing a state of spray water in the dental handpiece according to the embodiment.
Fig. 9 is an enlarged view showing a spraying portion of a modification 1 of the dental handpiece according to the embodiment.
Fig. 10 is an enlarged view showing a spraying portion of a modification 2 of the dental handpiece according to the embodiment.

### DESCRIPTION OF THE PREFERRED EMBODIMENTS

Hereinafter, embodiments of the present invention will be described with reference to figures.

First, a configuration of a dental handpiece according to an embodiment of the present invention will be described.

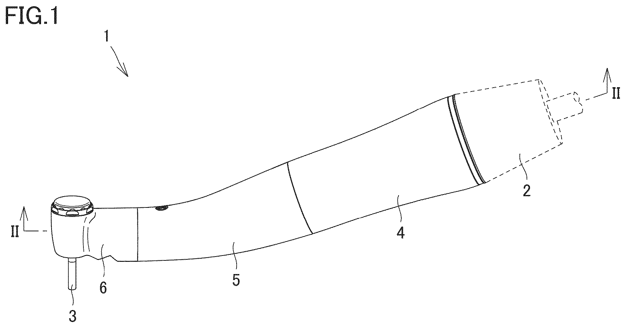

Referring to Fig. 1, a dental handpiece 1 is configured to detachably hold a cutting tool 3. The dental handpiece 1 is configured to hold the cutting tool 3 configured to cut a tooth and rotate the cutting tool 3 at high speed. In the present embodiment, the dental handpiece 1 is a motor handpiece or motor driven handpiece configured to rotate the cutting tool 3 at high speed by a motor. More specifically, the dental handpiece 1 is a contra-angle type handpiece. It should be noted that the dental handpiece 1 may be an air turbine handpiece configured to rotate the cutting tool 3 at high speed by an air turbine.

A driving portion 2 is connected to one end side (proximal end side) of the dental handpiece 1 in the longitudinal direction thereof. The driving portion 2 is attachable to and detachable from the proximal end side of the dental handpiece 1. The driving portion 2 includes a motor configured to drive for rotation or to drive a rotational motion. The cutting tool 3 is held on the other end side (distal end side) of the dental handpiece 1 in the longitudinal direction. The cutting tool 3 is configured to be rotated to cut a tooth.

The dental handpiece 1 includes a body portion 4, a neck portion 5 and a head portion 6. The body portion 4, the neck portion 5, and the head portion 6 are arranged in this order from the proximal end side to the distal end side of dental handpiece 1 in the longitudinal direction.

Body portion 4 is attachable to and detachable from driving portion 2. Body portion 4 is disposed on the proximal end side of dental handpiece 1. The diameter of body portion 4 is gradually decreased toward the distal end side of dental handpiece 1. Body portion 4 includes a housing having a substantially cylindrical shape. Body portion 4 is a grip portion to be held by a user, such as a practitioner and a maintenance operator.

When the user holds dental handpiece 1 such that cutting tool 3 faces downward and head portion 6 faces upward with body portion 4 being horizontal, neck portion 5 is curved upward at the center portion in the longitudinal direction and is gradually decreased in diameter toward the distal end side. Neck portion 5 includes a housing having a substantially cylindrical shape.

Head portion 6 is connected to body portion 4 via neck portion 5. Head portion 6 includes a housing having a substantially cylindrical shape and having an axial direction (upward/downward direction in Fig. 1) that is substantially orthogonal to the longitudinal direction of neck portion 5.

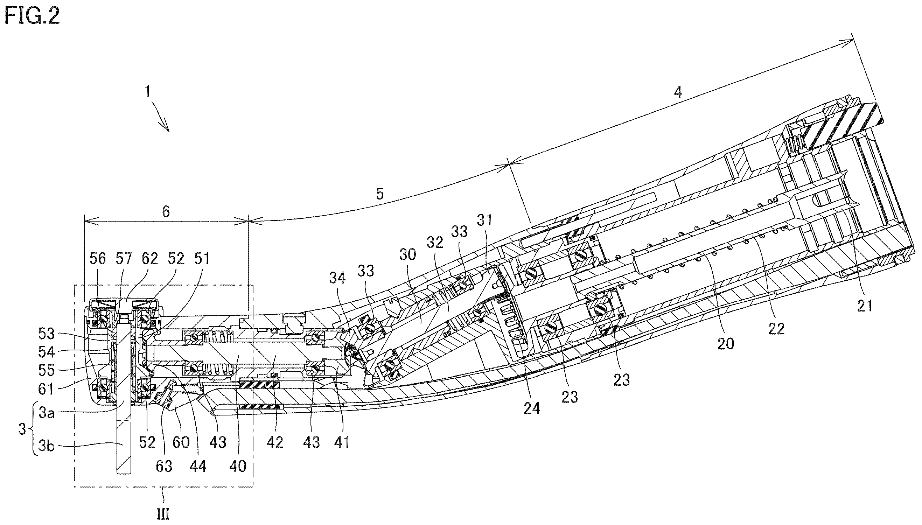

Referring to Figs. 1 and 2, dental handpiece 1 is configured to rotate cutting tool 3 at high speed by increasing the speed of the rotation of the motor of driving portion 2 by a rotation transmission mechanism 10. Rotation transmission mechanism 10 is accommodated in a housing of each of body portion 4, neck portion 5, and head portion 6.

Rotation transmission mechanism 10 includes a first transmission mechanism 20, a second transmission mechanism 30, a third transmission mechanism 40, and a tool rotation mechanism 50. First transmission mechanism 20, second transmission mechanism 30, third transmission mechanism 40, and tool rotation mechanism 50 are arranged in this order from the proximal end side to the distal end side of dental handpiece 1 in the longitudinal direction.

First transmission mechanism 20 is disposed inside the housings of body portion 4 and neck portion 5. Second transmission mechanism 30 is disposed inside the housing of neck portion 5. Third transmission mechanism 40 is disposed inside the housings of neck portion 5 and head portion 6. Tool rotation mechanism 50 is disposed inside the housing of head portion 6.

First transmission mechanism 20 is configured to transmit the rotation of the motor of driving portion 2 to the second transmission mechanism. First transmission mechanism 20 includes a motor-coupled portion 21, a first rotation shaft 22, two first bearing portions 23, and a drive gear 24. Motor-coupled portion 21 is configured to be coupled to a shaft portion of the motor of driving portion 2. Motor-coupled portion 21 is connected to the proximal end side of first rotation shaft 22. First rotation shaft 22 is a hollow, substantially cylindrical body. First rotation shaft 22 is held by two first bearing portions 23 so as to be rotatable around a rotation axis extending in the axial direction. Two first bearing portions 23 are disposed to be separated from each other in the axial direction of first rotation shaft 22. Each of two first bearing portions 23 is a ball bearing. Drive gear 24 is connected to the distal end side of first rotation shaft 22. Drive gear 24 is an internally-toothed gear or an internal gear or a hub gear.

Second transmission mechanism 30 is configured to transmit the rotation of first transmission mechanism 20 to third transmission mechanism 40. Second transmission mechanism 30 includes a pinion gear 31, a second rotation shaft 32, two second bearing portions 33, and a bevel gear 34. Pinion gear 31 is configured to be engaged with drive gear 24. Pinion gear 31 is connected to the proximal end side of second rotation shaft 32. Second rotation shaft 32 is a solid, substantially cylindrical body. Second rotation shaft 32 is held by two second bearing portions 33 so as to be rotatable around a rotation axis extending in the axial direction. Two second bearing portions 33 are disposed to be separated from each other in the axial direction of second rotation shaft 32. Each of two second bearing portions 33 is a ball bearing. Bevel gear 34 is connected to the distal end side of second rotation shaft 32. Bevel gear 34 is an internally-toothed gear or an internal gear or an hub gear.

Third transmission mechanism 40 is configured to transmit the rotation of second transmission mechanism 30 to tool rotation mechanism 50. Third transmission mechanism 40 includes a middle gear 41, a third rotation shaft 42, two third bearing portions 43, and a front gear 44. Middle gear 41 is configured to be engaged with bevel gear 34. Middle gear 41 is connected to the proximal end side of third rotation shaft 42. Third rotation shaft 42 is a solid, substantially cylindrical body. Third rotation shaft 42 is held by two third bearing portions 43 so as to be rotatable around a rotation axis extending in the axial direction. Two third bearing portions 43 are disposed to be separated from each other in the axial direction of third rotation shaft 42. Each of two third bearing portions 43 is a ball bearing. Front gear 44 is connected to the distal end side of third rotation shaft 42. Front gear 44 is an externally-toothed gear or an internal gear or an hub gear.

Tool rotation mechanism 50 is configured to rotate cutting tool 3 by transmitting the rotation of third transmission mechanism 40 to cutting tool 3. Tool rotation mechanism 50 includes a holding portion 51 and two head-portion bearing portions 52.

Holding portion 51 is held by two head-portion bearing portions 52 so as to be rotatable around a rotation axis extending in the axial direction of cutting tool 3. Two head-portion bearing portions 52 are disposed to be separated from each other in the axial direction of holding portion 51. Each of two head-portion bearing portions 52 is a ball bearing.

Cutting tool 3 includes a base stem 3a and a cutting edge portion 3b. Base stem 3a and cutting edge portion 3b are formed in one piece. Base stem 3a and cutting edge portion 3b form a substantially cylindrical shape. Base stem 3a is held by holding portion 51 inside head portion 6. Cutting edge portion 3b protrudes from base stem 3a in the axial direction of base stem 3a.

Holding portion 51 has a mechanism configured to detachably hold cutting tool 3. Holding portion 51 includes a rotation cylinder 53, a chuck 54, an elastic body 55, a slide ring 56, and a ring stopper 57.

Chuck 54, elastic body 55, slide ring 56, and ring stopper 57 are inserted in rotation cylinder 53. Chuck 54, elastic body 55, slide ring 56, and ring stopper 57 are accommodated in rotation cylinder 53 in this order from the cutting edge side toward the cutting root side of cutting tool 3.

Rotation cylinder 53 is configured to allow cutting tool 3 to be inserted therein. Rotation cylinder 53 is a head-side gear formed to have a cylindrical shape. Rotation cylinder 53 is a substantially cylindrical body having: an inner diameter that allows for accommodation of chuck 54, elastic body 55, slide ring 56, and ring stopper 57; and an outer diameter that can be fitted to an inner ring of head-portion bearing portion 52.

Rotation cylinder 53 can convert the rotation of third transmission mechanism 40 around the axis along the longitudinal direction of neck portion 5 into the rotation of tool rotation mechanism 50 around the axis along the longitudinal direction of cutting tool 3.

Rotation cylinder 53 includes a stem main body 53a, which is a substantially cylindrical body, and rotor gear teeth 53b. Rotor gear teeth 53b are a bevel gear. Stem main body 53a is a substantially cylindrical body. Rotor gear teeth 53b protrude radially outward from an outer peripheral surface of stem main body 53a, and, when viewed in a cross-sectional view, a surface thereof on the cutting edge side is inclined downward in a direction toward the radially outward side. The plurality of rotor gear teeth 53b are provided at equal intervals along the outer periphery of stem main body 53a. Rotation cylinder 53 provided with the plurality of rotor gear teeth 53b is a bevel gear and is a driven gear engaged with front gear 44 of third transmission mechanism 40.

Chuck 54 is configured to attach and detach cutting tool 3 inserted in rotation cylinder 53. Chuck 54 is disposed on the cutting edge side (lower side) with respect to the substantially center of cutting tool 3 in the longitudinal direction inside rotation cylinder 53. Chuck 54 is configured to hold base stem 3a of cutting tool 3 inserted along the longitudinal direction of cutting tool 3.

Elastic body 55 is configured to bias chuck 54 to engage chuck 54 with cutting tool 3. Elastic body 55 is a compressive elastic body deformable in a compression direction, and is externally fitted to an upper portion of chuck 54 inside rotation cylinder 53.

Slide ring 56 is configured to be movable in the axial direction inside rotation cylinder 53. Slide ring 56 is accommodated on the cutting root side of cutting tool 3 with respect to elastic body 55 and is configured to push elastic body 55.

In holding portion 51, elastic body 55 before being compressively deformed pushes an end portion of chuck 54 on the cutting root side, and chuck 54 having been decreased in diameter by the pushing of elastic body 55 can hold cutting tool 3. On the other hand, when elastic body 55 is compressively deformed, cutting tool 3 held by chuck 54 can be released.

Ring stopper 57 is formed to have a substantially ring shape and is externally fitted to a portion of slide ring 56 on the cutting root side. Ring stopper 57 can regulate a position of cutting tool 3 when cutting tool 3 is attached.

Each of two head-portion bearing portions 52 is formed to have a substantially ring shape. Two head-portion bearing portions 52 rotatably support the cutting edge side end portion and cutting root side end portion of holding portion 51 inside head portion 6.

Head portion 6 includes a stem portion 60, a housing main body portion 61 and a push cap 62. Stem portion 60 is connected to the distal end side of neck portion 5. Housing main body portion 61 is a hollow, substantially cylindrical body extending along the longitudinal direction of cutting tool 3 attached thereto. Tool rotation mechanism 50, which is configured to be driven to rotate cutting tool 3 held inside housing main body portion 61, is accommodated therein. The upper and lower ends of housing main body portion 61 are opened, and push cap 62 is disposed at the upper end portion of housing main body portion 61. Push cap 62 is provided for the sake of an operation of attaching and detaching cutting tool 3 to and from head portion 6.

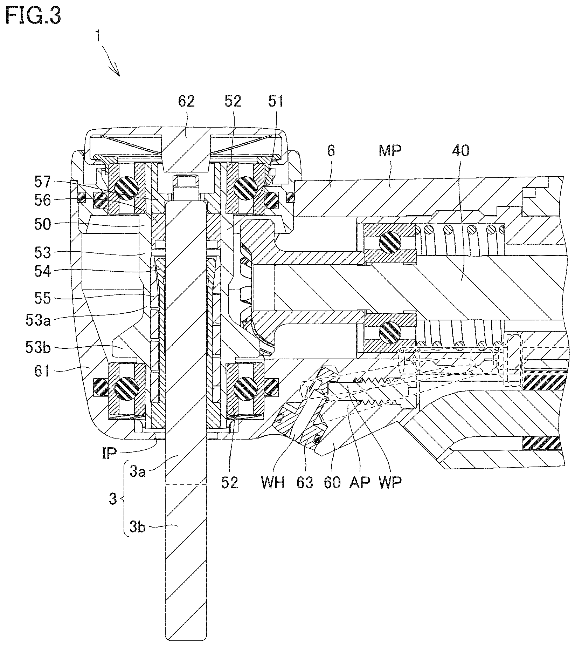

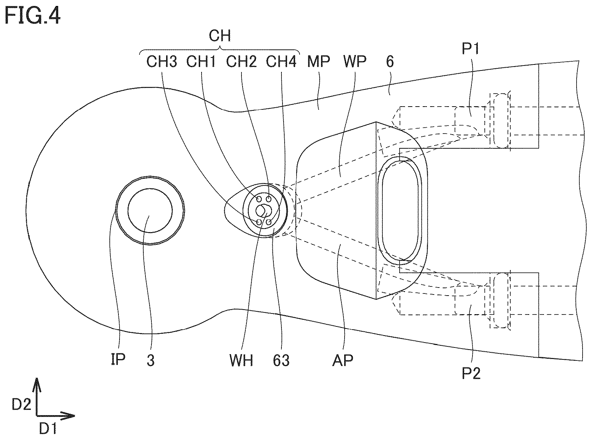

Referring to Figs. 3 and 4, holding portion 51 is provided with an insertion port IP into which cutting tool 3 can be inserted. Holding portion 51 is configured to hold cutting tool 3 inserted in insertion port IP. Head portion 6 includes a spraying portion 63. Dental handpiece 1 includes a main body portion MP. In the present embodiment, stem portion 60, housing main body portion 61 and spraying portion 63 constitute main body portion MP. Holding portion 51 is accommodated in main body portion MP. Main body portion MP is provided with a water introduction hole WH and a plurality of chip air holes CH. In the present embodiment, spraying portion 63 is provided with water introduction hole WH and the plurality of chip air holes CH. One-point water introduction is employed with which only one water introduction hole WH is provided.

Spraying portion 63 is attached to stem portion 60. Stem portion 60 is provided with a water introduction tube path WP and an air supply tube path AP. Water introduction tube path WP communicates with water introduction hole WH. Water introduction tube path WP is configured to supply water to water introduction hole WH. Water introduction tube path WP is connected to a water introduction tube P1. Water introduction tube P1 is connected to a water introduction portion of driving portion 2 shown in Fig. 1. Air supply tube path AP communicates with the plurality of chip air holes CH. Air supply tube path AP is configured to supply air to the plurality of chip air holes CH. Air supply tube path AP is connected to an air supply tube P2. Air supply tube P2 is connected to an air supply portion of driving portion 2 shown in Fig. 1.

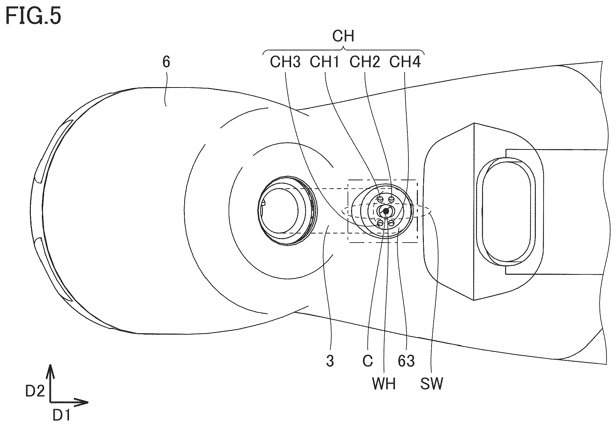

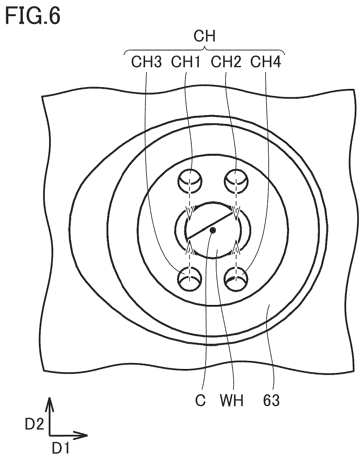

Referring to Figs. 5 and 6, water introduction hole WH is disposed to face cutting tool 3. The opening of water introduction hole WH has a circular shape. The opening of each of the plurality of water introduction holes WH may have a perfect circular shape. The opening area of water introduction hole WH is larger than the opening area of each of the plurality of chip air holes CH.

The plurality of chip air holes CH provided in main body portion MP are disposed to sandwich water introduction hole WH in a second direction D2 intersecting a first direction D1 in which insertion port IP and water introduction hole WH are arranged. First direction D1 may be orthogonal to second direction D2. The opening of each of the plurality of chip air holes CH has a circular shape. The opening of each of the plurality of chip air holes CH may have a perfect circular shape. The plurality of chip air holes CH may be formed to have the same shape.

The plurality of chip air holes CH include a first hole CH1, a second hole CH2, a third hole CH3, and a fourth hole CH4. First hole CH1 and second hole CH2 are arranged along first direction D1. Third hole CH3 and fourth hole CH4 are arranged along first direction D1. First hole CH1 and third hole CH3 are arranged with water introduction hole WH being interposed between first hole CH1 and third hole CH3 in second direction D2, and are disposed on one side in first direction D1 with respect to center C of water introduction hole WH in first direction D1. Second hole CH2 and fourth hole CH4 are arranged with water introduction hole WH being interposed between second hole CH2 and fourth hole CH4 in second direction D2, and are disposed on the other side in first direction D1 with respect to center C of water introduction hole WH in first direction D1.

In first direction D1, first hole CH1, third hole CH3, and second hole CH2 and fourth hole CH4 are disposed on the inner side with respect to the diameter of water introduction hole WH. In second direction D2, first hole CH1 faces third hole CH3, and second hole CH2 faces fourth hole CH4.

Each of first hole CH1 and third hole CH3 is inclined toward water introduction hole WH. The inclination angle of each of first hole CH1 and third hole CH3 is, for example, 5°. Each of second hole CH2 and fourth hole CH4 is inclined toward water introduction hole WH. The inclination angle of each of second hole CH2 and fourth hole CH4 is, for example, 5°.

The size of the opening of water introduction hole WH in first direction D1 is larger than the size of the opening of water introduction hole WH in second direction D2. The opening of water introduction hole WH has a long-side direction in first direction D1 and a short-side direction in second direction D2. Water introduction hole WH is provided with a tapered portion having an opening area that is increased toward the opening thereof in first direction D1. The tapered portion is formed to have a crescent shape when viewed in a plan view.

Next, an operation of supplying spray water SW of dental handpiece 1 according to the embodiment will be described.

As shown in Figs. 3 and 4, water supplied from water introduction tube path WP to water introduction hole WH is introduced from water introduction hole WH. Air supplied from air supply tube path AP to the plurality of chip air holes CH is ejected from the plurality of chip air holes CH so as to hit the air onto the water introduced from water introduction hole WH. Thus, spray water is formed. The spray water is ejected toward cutting tool 3. Particularly, the spray water is ejected toward cutting edge portion 3b of cutting tool 3.

As shown in Figs. 5 and 6, by the air ejected from the plurality of chip air holes CH, spray water SW formed by the air and the water introduced from water introduction hole WH is suppressed from being spread in second direction D2. Specifically, with first hole CH1 and second hole CH2, spray water SW is suppressed from being spread to one side in second direction D2, whereas with third hole CH3 and fourth hole CH4, spray water SW is suppressed from being spread to the other side in second direction D2. The air is ejected from each of the plurality of chip air holes CH with substantially the same pressure.

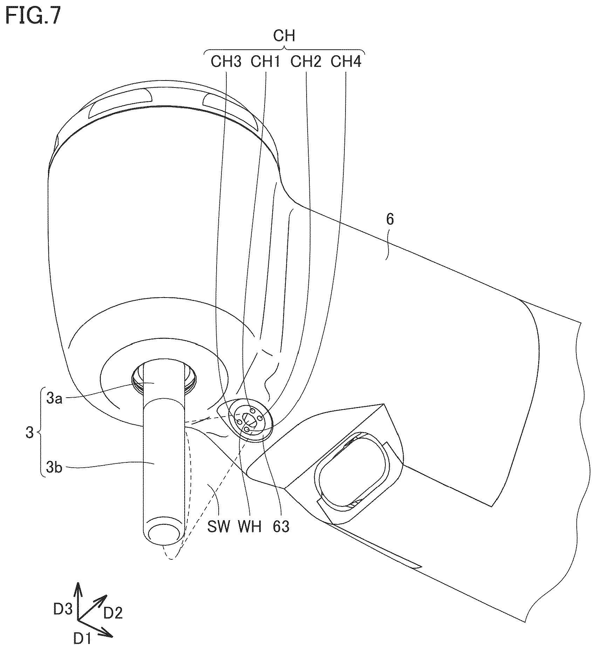

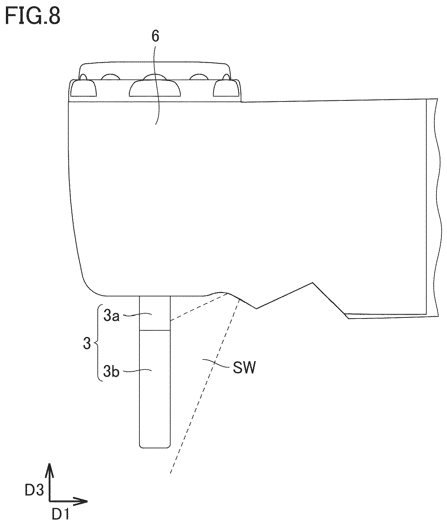

As shown in Figs. 7 and 8, spray water SW is spread in a longitudinal direction D3 by the air ejected from the plurality of chip air holes CH. In this way, spray water SW is spread in longitudinal direction D3 and is suppressed from being spread in second direction (lateral direction) D2.

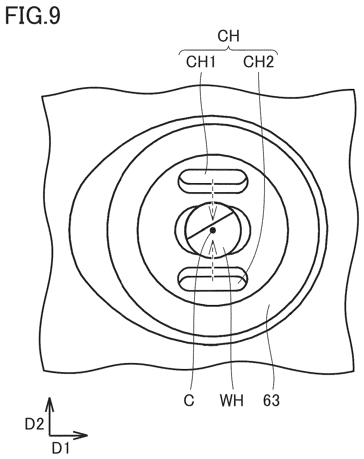

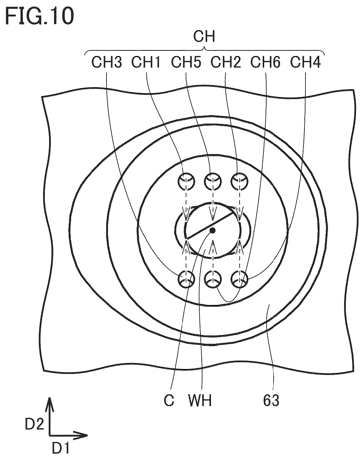

Next, modifications of dental handpiece 1 according to the embodiment will be described with reference to Figs. 9 and 10.

As shown in Fig. 9, in a modification 1 of dental handpiece 1 according to the embodiment, the configuration of the plurality of chip air holes CH is different from the configuration described above. In modification 1 of dental handpiece 1 according to the embodiment, the configuration of chip air hole CH is different from the configuration described above. The plurality of chip air holes CH include a first hole CH1 and a second hole CH2. First hole CH1 is an elongated hole having a long-side direction in first direction D1. Second hole CH2 is an elongated hole having a long-side direction in first direction D1. First hole CH1 and second hole CH2 are arranged with water introduction hole WH being interposed between first hole CH1 and second hole CH2 in second direction D2.

As shown in Fig. 10, in a modification 2 of dental handpiece 1 according to the embodiment, the configuration of the plurality of chip air holes CH is different from the configuration described above. The plurality of chip air holes CH include a first hole CH1, a second hole CH2, a third hole CH3, a fourth hole CH4, a fifth hole CH5, and a sixth hole CH6. First hole CH1, second hole CH2, and fifth hole CH5 are arranged along first direction D1. Third hole CH3, fourth hole CH4, and sixth hole CH6 are arranged along first direction D1. First hole CH1 and second hole CH2 are arranged with fifth hole CH5 being interposed between first hole CH1 and second hole CH2 in first direction D1. Third hole CH3 and fourth hole CH4 are arranged with sixth hole CH6 being interposed between third hole CH3 and fourth hole CH4 in first direction D1.

Next, functions and effects of dental handpiece 1 according to the embodiment will be described.

According to dental handpiece 1 of the embodiment, the plurality of chip air holes CH provided in main body portion MP are disposed to sandwich water introduction hole WH in second direction D2 intersecting first direction D1 in which insertion port IP and water introduction hole WH are arranged. Thus, spray water SW is spread in longitudinal direction D3 by the air ejected from the plurality of chip air holes CH, with the result that spray water SW can be spread in longitudinal direction D3. Further, by the air ejected from the plurality of chip air holes CH, spray water SW can be suppressed from being spread in second direction D2. Therefore, spray water SW can be spread in longitudinal direction D3, and spray water SW can be suppressed from being spread in second direction (lateral direction) D2.

In dental handpiece 1 according to the embodiment, so-called one-point water introduction is employed with which only one water introduction hole WH is provided. In the one-point water introduction, water introduction tube path WP and air supply tube path AP can be shorter than those in multi-point water introduction with which a plurality of water introduction holes WH are provided. Therefore, a space on the front side of head portion 6 can be made small. Therefore, in dental handpiece 1 according to the embodiment, the size of head portion 6 in longitudinal direction D3 can be reduced. That is, the height of head portion 6 can be reduced.

Further, in the case where the merged portion at which the water supply tube path and the air supply tube path are merged is provided inside head portion 6 as in PTL 1, the height of head portion 6 is increased by the height of the water spray tube path from the merged portion to the ejection port of the lower surface of head portion 6. In dental handpiece 1 according to the embodiment, water introduced from water introduction hole WH and air introduced from the plurality of chip air holes CH hit each other outside dental handpiece 1, thereby forming spray water SW. Therefore, the height of head portion 6 can be made low.

According to dental handpiece 1 of the embodiment, first hole CH1 and third hole CH3 are arranged with water introduction hole WH being interposed between first hole CH1 and third hole CH3 in second direction D2, and are disposed on one side in first direction D1 with respect to center C of water introduction hole WH in first direction D1. Second hole CH2 and fourth hole CH4 are arranged with water introduction hole WH being interposed between second hole CH2 and fourth hole CH4 in second direction D2, and are disposed on the other side in first direction D1 with respect to center C of water introduction hole WH in first direction D1. Therefore, spray water SW can be suppressed from being divided in first direction D1 by the air ejected from first hole CH1, third hole CH3, second hole CH2 and fourth hole CH4. Therefore, spray water SW can be continuously ejected in first direction D1.

According to dental handpiece 1 of the embodiment, each of first hole CH1 and third hole CH3 is inclined toward water introduction hole WH, and each of second hole CH2 and fourth hole CH4 is inclined toward water introduction hole WH. Therefore, the air ejected from first hole CH1, third hole CH3, second hole CH2 and fourth hole CH4 can hit the water introduced from the water introduction hole WH. Thus, the spray water can be formed.

According to dental handpiece 1 of the embodiment, the size of the opening of water introduction hole WH in first direction D1 is larger than the size of the opening of water introduction hole WH in second direction D2. Therefore, spray water SW can be made longer in first direction D1 than in second direction D2. Therefore, spray water SW can be elongated in the longitudinal direction. Hence, spray water SW can be long in longitudinal direction D3. Thus, even when cutting tool 3 is long, spray water SW can be surely ejected to cutting tool 3.

Further, when the opening of water introduction hole WH is simply increased, the opening of water introduction hole WH becomes large not only in first direction D1 but also in second direction D2. In this case, since spray water SW is spread in second direction D2 to obstruct the user's treatment operation field, it is not preferable to simply increase the opening of water introduction hole WH. According to dental handpiece 1 of the embodiment, spray water SW can be suppressed from being spread in second direction D2.

## Claims

1. A dental handpiece (1) configured to detachably hold a cutting tool (3), the dental handpiece (1) comprising:
a holding portion (51) provided with an insertion port (IP) into which the cutting tool (3) is insertable, the holding portion (51) being configured to hold the cutting tool (3) inserted in the insertion port (IP); and
a main body portion (MP) configured to accommodate the holding portion (51), the main body portion (MP) being provided with a water introduction hole (WH) and a plurality of chip air holes (CH), wherein
the plurality of chip air holes (CH) provided in the main body portion (MP) is disposed to sandwich the water introduction hole (WH) in a second direction (D2) intersecting a first direction (D1) in which the insertion port (IP) and the water introduction hole (WH) are arranged.

2. The dental handpiece (1) according to claim 1, wherein
the plurality of chip air holes (CH) includes a first hole (CH1), a second hole (CH2), a third hole (CH3), and a fourth hole (CH4),
the first hole (CH1) and the second hole (CH2) are arranged along the first direction (D1),
the third hole (CH3) and the fourth hole (CH4) are arranged along the first direction (D1),
the first hole (CH1) and the third hole (CH3) are arranged with the water introduction hole (WH) being interposed between the first hole (CH1) and the third hole (CH3) in the second direction (D2), and are disposed on one side in the first direction (D1) with respect to a center (C) of the water introduction hole (WH) in the first direction (D1), and
the second hole (CH2) and the fourth hole (CH4) are arranged with the water introduction hole (WH) being interposed between the second hole (CH2) and the fourth hole (CH4) in the second direction (D2), and are disposed on the other side in the first direction (D1) with respect to the center (C) of the water introduction hole (WH) in the first direction (D1).

3. The dental handpiece (1) according to claim 2, wherein
each of the first hole (CH1) and the third hole (CH3) is inclined toward the water introduction hole (WH), and
each of the second hole (CH2) and the fourth hole (CH4) is inclined toward the water introduction hole (WH).

4. The dental handpiece (1) according to any one of claims 1 to 3, wherein a size of an opening of the water introduction hole (WH) in the first direction (D1) is larger than a size of the opening of the water introduction hole (WH) in the second direction (D2).

## Patentansprüche

1. Zahnmedizinisches Handgerät (1), das konfiguriert ist, um ein Schneidwerkzeug (3) abnehmbar zu halten, wobei das zahnmedizinische Handgerät (1) Folgendes umfasst:
einen Halteabschnitt (51), der mit einer Einführöffnung (IP) versehen ist, in die das Schneidwerkzeug (3) eingeführt werden kann, wobei der Halteabschnitt (51) konfiguriert ist, um das in die Einführöffnung (IP) eingeführte Schneidwerkzeug (3) zu halten; und
einen Hauptkörperabschnitt (MP), der konfiguriert ist, um den Halteabschnitt (51) aufzunehmen, wobei der Hauptkörperabschnitt (MP) mit einem Wassereinleitungsloch (WH) und einer Vielzahl von Spanluftlöchern (CH) versehen ist, wobei
die Vielzahl von Spanluftlöchern (CH), die in dem Hauptkörperabschnitt (MP) vorgesehen sind, angeordnet ist, um das Wassereinleitungsloch (WH) in einer zweiten Richtung (D2), die eine erste Richtung (D1) schneidet, in der die Einführöffnung (IP) und das Wassereinleitungsloch (WH) angeordnet sind, sandwichartig einzuschließen.

2. Zahnmedizinisches Handgerät (1) nach Anspruch 1, wobei
die Vielzahl von Spanluftlöchern (CH) ein erstes Loch (CH1), ein zweites Loch (CH2), ein drittes Loch (CH3) und ein viertes Loch (CH4) umfasst,
das erste Loch (CH1) und das zweite Loch (CH2) entlang der ersten Richtung (D1) angeordnet sind,
das dritte Loch (CH3) und das vierte Loch (CH4) entlang der ersten Richtung (D1) angeordnet sind,
das erste Loch (CH1) und das dritte Loch (CH3) so angeordnet sind, dass das Wassereinleitungsloch (WH) zwischen dem ersten Loch (CH1) und dem dritten Loch (CH3) in der zweiten Richtung (D2) angeordnet ist, und auf einer Seite in der ersten Richtung (D1) in Bezug auf eine Mitte (C) des Wassereinleitungslochs (WH) in der ersten Richtung (D1) angeordnet sind, und
das zweite Loch (CH2) und das vierte Loch (CH4) so angeordnet sind, dass das Wassereinleitungsloch (WH) zwischen dem zweiten Loch (CH2) und dem vierten Loch (CH4) in der zweiten Richtung (D2) angeordnet ist, und auf der anderen Seite in der ersten Richtung (D1) in Bezug auf die Mitte (C) des Wassereinleitungslochs (WH) in der ersten Richtung (D1) angeordnet sind.

3. Zahnmedizinisches Handgerät (1) nach Anspruch 2, wobei
jedes des ersten Lochs (CH1) und des dritten Lochs (CH3) in Richtung des Wassereinleitungslochs (WH) geneigt ist, und
jedes des zweiten Lochs (CH2) und des vierten Lochs (CH4) in Richtung des Wassereinleitungslochs (WH) geneigt ist.

4. Zahnmedizinisches Handgerät (1) nach einem der Ansprüche 1 bis 3, wobei eine Größe einer Öffnung des Wassereinleitungslochs (WH) in der ersten Richtung (D1) größer ist als eine Größe der Öffnung des Wassereinleitungslochs (WH) in der zweiten Richtung (D2).

## Revendications

1. Pièce à main dentaire (1) configurée pour maintenir de manière détachable un outil de coupe (3), la pièce à main dentaire (1) comprenant :
une partie de maintien (51) dotée d'un orifice d'insertion (IP) dans lequel l'outil de coupe (3) est insérable, la partie de maintien (51) étant configurée pour maintenir l'outil de coupe (3) inséré dans l'orifice d'insertion (IP) ; et
une partie de corps principal (MP) configurée pour accueillir la partie de maintien (51), la partie de corps principal (MP) étant dotée d'un trou d'introduction d'eau (WH) et d'une pluralité de trous d'air pour copeaux (CH), dans laquelle
la pluralité de trous d'air pour copeaux (CH) prévus dans la partie de corps principal (MP) est disposée pour intercaler le trou d'introduction d'eau (WH) dans une deuxième direction (D2) croisant une première direction (D1) dans laquelle l'orifice d'insertion (IP) et le trou d'introduction d'eau (WH) sont agencés.

2. Pièce à main dentaire (1) selon la revendication 1, dans laquelle
la pluralité de trous d'air pour copeaux (CH) comporte un premier trou (CH1), un deuxième trou (CH2), un troisième trou (CH3), et un quatrième trou (CH4),
le premier trou (CH1) et le deuxième trou (CH2) sont agencés le long de la première direction (D1),
le troisième trou (CH3) et le quatrième trou (CH4) sont agencés le long de la première direction (D1),
le premier trou (CH1) et le troisième trou (CH3) sont agencés avec le trou d'introduction d'eau (WH) interposé entre le premier trou (CH1) et le troisième trou (CH3) dans la deuxième direction (D2), et sont disposés d'un côté dans la première direction (D1) par rapport à un centre (C) du trou d'introduction d'eau (WH) dans la première direction (D1), et
le deuxième trou (CH2) et le quatrième trou (CH4) sont agencés avec le trou d'introduction d'eau (WH) interposé entre le deuxième trou (CH2) et le quatrième trou (CH4) dans la deuxième direction (D2), et sont disposés de l'autre côté dans la première direction (D1) par rapport au centre (C) du trou d'introduction d'eau (WH) dans la première direction (D1).

3. Pièce à main dentaire (1) selon la revendication 2, dans laquelle
chacun du premier trou (CH1) et du troisième trou (CH3) est incliné vers le trou d'introduction d'eau (WH), et
chacun du deuxième trou (CH2) et du quatrième trou (CH4) est incliné vers le trou d'introduction d'eau (WH) .

4. Pièce à main dentaire (1) selon l'une des revendications 1 à 3, dans laquelle une taille d'une ouverture du trou d'introduction d'eau (WH) dans la première direction (D1) est supérieure à une taille de l'ouverture du trou d'introduction d'eau (WH) dans la deuxième direction (D2).
